# NEUE EUROPÄISCHE PATENTSCHRIFT

(11) **EP 3 620 059 B2**
(45) Veröffentlichungstag und Bekanntmachung des Hinweises auf die Entscheidung über den Einspruch: **20.08.2025**
(45) Hinweis auf die Patenterteilung: 30.12.2020
(21) Anmeldenummer: 18192920.9
(22) Anmeldetag: 06.09.2018
(51) Int. Cl.: A23C 11/00, A23L 25/00

(54) **VERFAHREN ZUM HERSTELLEN EINES, BEVORZUGT VEGANEN, LEBENSMITTELPARTIKULATES AUF MANDELMEHLBASIS**
A METHOD FOR PRODUCING PREFERABLY VEGAN PARTICULATE FOOD BASED ON ALMOND FLOUR
PROCÉDÉ DE FABRICATION D'UNE MATIÈRE PARTICULAIRE DE DENRÉE ALIMENTAIRE, DE PRÉFÉRENCE VÉGANE,À BASE DE FARINE D'AMANDES

(43) Veröffentlichungstag der Anmeldung: 11.03.2020
(73) Patentinhaber: Hochland SE, 88178 Heimenkirch (DE)
(72) Erfinder: HERRMANN-BÜRK, Dirk Michael, 88279 Amtzell (DE); MAHLER, Marie-Luise, 88161 Lindenberg (DE)
(74) Vertreter: Patent- und Rechtsanwälte Behrmann Wagner PartG mbB

(56) Entgegenhaltungen:
- DE-U1- 202015 105 079
- ES-A1- 2 095 806
- US-A- 5 656 321
- BERNAT NEUS, CHÁFER MAITE, CHIRALT AMPARO, GONZÁLEZ-MARTÍNEZ CHELO: "Development of a non-dairy probiotic fermented product based on almond milk and inulin", FOOD SCIENCE AND TECHNOLOGY INTERNATIONAL, vol. 21, no. 6, 23 September 2015 (2015-09-23), pages 440 - 453, XP055525032
- ANONYMUS: "Almond & Coconut Milk Yoghurt", GNPD, MINTEL, 1 July 2014 (2014-07-01), XP002780476
- ANONYMOUS: "Almond Yogurt (Raw, Vegan, GF) - Kale Yes! Kitchen", 7 December 2016 (2016-12-07), XP055432078, Retrieved from the Internet <URL:http://www.kaleyeskitchen.com/blog-1/2016/12/7/almond-yogurt-raw-vegan-gf> [retrieved on 20171205]
- ANON: "Strawberry Flavored Almond Non-Dairy Yogurt", GNPD, MINTEL, 1 September 2014 (2014-09-01), XP002762665
- NEUS BERNAT ET AL: "Probiotic fermented almond "milk" as an alternative to cow-milk yoghurt", INTERNATIONAL JOURNAL OF FOOD STUDIES, vol. 4, no. 2, 1 January 2015 (2015-01-01), pages 201 - 211, XP055222491, DOI: 10.7455/ijfs/4.2.2015.a8
- VICTORIA FERRAGUT ET AL: "Ultra-high-pressure homogenization (UHPH) system for producing high-quality vegetable-based beverages: physicochemical, microbiological, nutritional and toxicological characteristics : Soy and almond beverages produced by UHPH", JOURNAL OF THE SCIENCE OF FOOD AND AGRICULTURE, vol. 95, no. 5, 30 March 2015 (2015-03-30), GB, pages 953 - 961, XP055590612, ISSN: 0022-5142, DOI: 10.1002/jsfa.6769
- NATALIA TORO-FUNES ET AL: "Influence of Ultra-high-Pressure Homogenization Treatment on the Phytosterols, Tocopherols, and Polyamines of Almond Beverage", JOURNAL OF AGRICULTURAL AND FOOD CHEMISTRY, vol. 62, no. 39, 17 September 2014 (2014-09-17), US, pages 9539 - 9543, XP055590593, ISSN: 0021-8561, DOI: 10.1021/jf503324f
- KARLIS BRIVIBA ET AL: "Ultra high pressure homogenization of almond milk: Physico-chemical and physiological effects", FOOD CHEMISTRY, vol. 192, 1 February 2016 (2016-02-01), NL, pages 82 - 89, XP055525029, ISSN: 0308-8146, DOI: 10.1016/j.foodchem.2015.06.063
- DORA C. VALENCIA-FLORES ET AL: "Comparing the Effects of Ultra-High-Pressure Homogenization and Conventional Thermal Treatments on the Microbiological, Physical, and Chemical Quality of Almond Beverages", JOURNAL OF FOOD SCIENCE, vol. 78, no. 2, 1 February 2013 (2013-02-01), pages E199 - E205, XP055110347, ISSN: 0022-1147, DOI: 10.1111/1750-3841.12029
- VICTORIA FERRAGUT ET AL: "Quality Characteristics and Shelf-Life of Ultra-High Pressure Homogenized (UHPH) Almond Beverage", FOODS, vol. 4, no. 4, 20 May 2015 (2015-05-20), pages 159 - 172, XP055590599, DOI: 10.3390/foods4020159

## Beschreibung

Die Erfindung betrifft ein Verfahren zum Herstellen eines, bevorzugt veganen, Lebensmittelpartikulates auf Mandelmehlbasis, Des Weiteren offenbart ist dessen Weiterverarbeitung zu einem Lebensmittelendprodukt. Das aus dem erfindungsgemäßen Verfahren resultierende Lebensmittelpartikulat dient bevorzugt als Rezepturbestandteil zur Herstellung von, insbesondere veganen, Lebensmittelendprodukten oder unmittelbar selbst als Lebensmittelendprodukt.

Aus der WO 2017/050480 A1 ist ein Verfahren zur Herstellung eines veganen, frischkäseähnlichen Lebensmitteproduktes auf Mandelbasis bekannt. Das bekannte Verfahren beruht auf der Verarbeitung einer pastösen Masse aus Mandeln, die gemäß einer bevorzugten Ausführungsform mit Öl bzw. Fett angereichert wird, wobei durch Zugeben von Wasser eine pumpfähige Masse gewonnen wird, die erhitzt und dann hochdruckhomogenisiert wird. Das bekannte Verfahren führt zu hervorragenden veganen Lebensmittelprodukten, die als Frischkäseersatz dienen und bzgl. ihrer Textureigenschaften unmittelbar vergleichbar mit Frischkäse auf Milchbasis sind. Jedoch gestaltet sich die Weiterverarbeitung des bekannten Produktes als Rezepturbestandteil von Folge- bzw. Alternativlebensmittelendprodukten schwierig. Konkret ist die mögliche Applikationsmenge limitiert, da es insbesondere bei der Vermischung mit Wasser zu einer unerwünschten Emulsionsbildung des im Produkt enthaltenen Öles kommt. Ebenso ist eine Störung der Gelbildung bei stärkebasierten Produkten aufgrund der Inkompatibilität nativer Proteine mit Stärkegelen zu beobachten. Das aus der vorgenannten Druckschrift bekannte frischkäseähnliche Lebensmittelprodukt würde als Rezepturbestandteil von Folge- bzw. Alternativlebensmittelendprodukten aufgrund des hohen Ausgangsfettgehaltes die Zugabe weiterer fetthaltiger Zutaten stark limitieren und ermöglicht insbesondere nicht den Fettgehalt im Endprodukt in weiten Grenzen zu wählen, was wünschenswert wäre.

Aus der WO 2018/122021 A1 ist ein Verfahren zum Herstellen eines proteinhaltigen Getränkes bekannt, wobei das bekannte Verfahren vorsieht, eine flüssige Mischung von Pflanzenmaterialpartikeln und Wasser nach einem Homogenisierschritt zu erhitzen.

Die EP 1 292 196 B2 beschreibt ein Verfahren zum Herstellen eines proteinhaltigen Getränks, wobei hier als Zutat isolierte bzw. extrahierte, d.h. reine Pflanzenproteine und nicht ganze Pflanzenmaterialpartikel eingesetzt werden. Ganze Pflanzenmaterialpartikel bzw. Pflanzenmehle sind im Gegensatz zu den zum Einsatz kommenden Proteinen von vorneherein nicht wasserlöslich. Auch ist die Partikelgröße der eingesetzten Proteine deutlich größer als diejenige von den im Rahmen der vorliegenden Erfindung interessierenden Mehlpartikeln.

Aus der DE 20 2015 105 079 U1 ist ein Verfahren zum Herstellen eines frischkäseähnlichen Lebensmittelproduktes mit hohem Fettgehalt bekannt, wobei das Verfahren auf dem Einsatz einer pastösen Masse beruht, die aus Nüssen und/oder Kernen hergestellt wird. Die pastöse Masse wird dann zu einer pumpfähigen Masse verarbeitet, die sodann erhitzt und heiß hochdruckhomogenisiert wird. Als Verfahrensergebnis resultiert ein veganes, frischkäseähnliches Produkt mit hohem Fett- und vergleichsweise geringem Proteingehalt.

Aus der US 5,656,321 A ist ein Verfahren zum Herstellen eines Milch-Ersatz-Produktes auf Basis von teilentöltem Mandelmehl bekannt. Im Rahmen des bekannten Verfahrens wird das Mandelmehl mit Wasser vermischt, im nassen Zustand vermahlen und zentrifugiert, wobei Grobpartikel aus dem Produkt entfernt werden. Im gekühlten Zustand erfolgt eine Hochdruckhomogenisierung.

### Die folgenden Dokumente

Victoria Ferragut ET AL: "Ultra-high-pressure homogenization (UHPH) system for producing high-quality vegetable-based beverages: physicochemical, microbiological, nutritional and toxicological characteristics : Soy and almond beverages produced by UHPH", JOURNAL OF THE SCIENCE OF FOOD AND AGRICULTURE, Bd. 95, Nr. 5, 30. März 2015 (2015-03-30), Seiten 953-961, XP055590612,GBISSN: 0022-5142, DOI: 10.1002/jsfa.6769
Natalia Toro-Funes ETAL: "Influence of Ultra-high-Pressure Homogenization Treatment on the Phytosterols, Tocopherols, and Polyamines of Almond Beverage",Journal of Agricultural and Food Chemistry,Bd. 62, Nr. 39, 17. September 2014 (2014-09-17), Seiten 9539-9543, XP055590593,USISSN: 0021-8561, DOI: 10.1021/jf503324f
Karlis Briviba ET AL: "Ultra high pressure homogenization of almond milk: Physico-chemical and physiological effects",FOOD CHEMISTRY,BD. 192, 1. Februar 2016 (2016-02-01), Seiten 82-89, XP055525029NLISSN: 0308-8146, DOI: 10.1016/j.foodchem.2015.06.063
Dora C. Valencia-Flores ET AL: "Comparing the Effects of Ultra-High-Pressure Homogenization and Conventional Thermal Treatments on the Microbiological, Physical, and Chemical Quality of Almond-Beverages", Journal of Food Science,Bd. 78, Nr. 2, 1. Februar 2013 (2013-02-01), Seiten E199-E205, XP055110347,ISSN: 0022-1147, DOI: 10.1111/1750-3841.12029
Victoria Ferragut ET AL: "Quality Characteristics and Shelf-Life of Ultra-High Pressure Homogenized (UHPH) Almond Beverage"Foods,Bd. 4, Nr. 4, 20. Mai 2015 (2015-05-20), Seiten 159-172,XP055590599,DOI: 10.3390/foods4020159
beschäftigen sich mit der sogenannten Ultra-Hochdruckhomogenisation bei Drücken jenseits von 1000 bar. Diese Technologie dient in erster Linie der Haltbarmachung von Lebensmittelprodukten.

Ausgehend von dem vorgenannten Stand der Technik liegt der Erfindung die Aufgabe zugrunde, ein alternatives, bevorzugt veganes Lebensmittelpartikulat auf Mandelbasis anzugeben, welches sich insbesondere für die Weiterverarbeitung zu, bevorzugt veganen, alternativen Lebensmittelendprodukten (insbesondere Milchersatzprodukten) eignet und sich gleichzeitig - insbesondere verglichen mit dem bekannten frischkäseähnlichen Lebensmittelprodukt - durch einen erhöhten Proteinanteil und reduzierten Öl- bzw. Fettanteil auszeichnet.

Diese Aufgabe wird hinsichtlich des Verfahrens mit den Merkmalen des Anspruchs 1 gelöst, wobei erfindungsgemäß als Basis für die Herstellung des Lebensmittelpartikulates teilentöltes bzw. teilentfettetes Mandelmehl eingesetzt wird, wobei das Verfahren so ausgebildet ist, dass es zu einer gezielten, teilweisen Defunktionalisierung, Denaturierung und Deagglomeration der in den Partikeln enthaltenen Mandelproteine und Aggregate kommt und im Ergebnis eine Dispersion von Mandelprotein-/Faserpartikeln mit definierter Partikelgröße resultiert. Wesentlich ist, dass es sich bei den zum Einsatz kommenden, teilentölten Mandelpartikeln nicht um reine Proteinpartikel handelt, sondern um (bis auf den reduzierten Fettgehalt) vollständige Pflanzenpartikel, die zusätzlich zu den Proteinen noch Fasern, Kohlenhydrate und Stärke, etc. umfassen. Im Vergleich zu herkömmlichem Mandelmehl wird erfindungsgemäß jedoch fettreduziertes, d.h. teilentöltes Mandelmehl eingesetzt.

Konkret umfasst das erfindungsgemäße Verfahren den Schritt des Bereitstellens von teilentöltem Mandelmehl, welches bevorzugt mit einer Ölmühle gewonnen wird. Das zum Einsatz kommende, teilentölte Mandelmehl zeichnet sich durch einen Fettgewichtsprozentanteil zwischen 5 und 20 Gew.-%, vorzugsweise zwischen 10 und 20 Gew.-%, weiter bevorzugt von, zumindest näherungsweise, 15 Gew.-% und einen Proteingewichtsanteil zwischen 43 und 57 Gew.-%, vorzugsweise zwischen 48 und 52 Gew.-%, ganz besonders bevorzugt von, zumindest näherungsweise, 50 Gew.-% aus. Weiter bevorzugt ist es, wenn das zum Einsatz kommende Mandelmehl eine Partikelgrößenverteilung aufweist, die gekennzeichnet ist durch einen mittleren Partikeldurchmesser (Median der Volumenverteilung) x_{50,3} zwischen 50µm und 500µm, vorzugsweise zwischen 100µm und 400µm, ganz besonders bevorzugt zwischen 100µm und 300µm. Besonders bevorzugt ist ein mittlerer Partikeldurchmesser x_{50,3} von, zumindest näherungsweise 150µm. Sämtliche in der vorliegenden Offenbarung angegebenen Parameter zu Partikelgrößenverteilungen bzw. Partikeldurchmessern wurden in wässriger Lösung mit einem partica laser scattering particle size distribution analyzer LA960 der Firma Horiba Scientific durchgeführt, vorliegend mit einer Zirkulationsgeschwindigkeit 2 und einer Rührgeschwindigkeit 2, wobei jeweils eine Beschallung der Probe vor der Messung mit Ultraschall in Stärke 2 für 1min erfolgte. Weiter bevorzugt zeichnet sich das zum Einsatz kommende Mandelmehl durch einen Wassergehalt zwischen 4 und 9 Gew.-%, vorzugsweise von, zumindest näherungsweise, 6 Gew.-% aus. Bevorzugt beträgt der pH-Wert des Mandelmehls zwischen 6,2 und 6,8, ganz besonders bevorzugt beträgt er 6,5. Die in vorliegender Offenbarung angegebenen Fett- bzw. Ölgewichtsprozentanteile wurden nach der Weibull-Stoldt VDLUFA C 15.2.3 Methode ermittelt. Die in vorliegender Offenbarung angegebenen Proteingehalte bzw. -anteile wurden nach der Dumas-Methode ermittelt.

Die vorgenannten Analysemethoden zur Bestimmung des Fett- sowie Proteingehaltes sowie zur Bestimmung der Partikelgröße liegen auch sämtlichen folgenden Angaben zum Fettgehalt, Proteingehalt bzw. zur Partikelgröße in vorliegender Offenbarung zugrunde.

Gemäß einer bevorzugten Ausführungsform kann die Herstellung des Mandelmehls Bestandteil des erfindungsgemäßen Verfahrens sein. Bevorzugt werden hierzu Mandeln zunächst blanchiert, woraufhin dann, bevorzugt in einer Ölmühle, Mandelöl bis zum Erreichen des vorgenannten Fettgehaltes entzogen wird. Der erhaltene Mandelpresskuchen wird gemahlen und so das zum Einsatz kommende teilentölte Mandelmehl erhalten.

Als weiterer Verfahrensschritt des erfindungsgemäßen Verfahrens wird Wasser bereitgestellt, und aus dem Mandelmehl und dem Wasser, bevorzugt unter Rühren, eine flüssige Mischung (hierunter fallen auch pastöse Mischungen) hergestellt, wobei der Gewichtsprozentanteil an dem Mandelmehl in der flüssigen Mischung zwischen 1 und 40 Gew.-%, vorzugsweise zwischen 2 und 20 Gew.-%, ganz besonders bevorzugt zwischen 8 und 15 Gew.-% und der Gewichtsprozentanteil an Wasser zwischen 60 und 99 Gew.-%, vorzugsweise zwischen 80 und 98 Gew.-%, bevorzugt zwischen 85 und 92 Gew.-%, besonders bevorzugt, zumindest näherungsweise, 87 Gew.-% beträgt bzw. entsprechend gewählt wird.

Als wesentlichen Verfahrensschritt umfasst das erfindungsgemäße Verfahren zumindest einen, vorzugsweise ausschließlich einen, ein- oder mehrstufigen Heißhochdruckhomogenisierschritt, der zwingend nach einem Erhitzungsschritt der flüssigen Mischung im erhitzten Zustand der flüssigen Mischung durchgeführt wird. Nach der Heißhochdruckhomogenisierung erfolgt dann, bevorzugt unmittelbar, ein Abkühlen der erhitzten, heißhochdruckhomogenisierten Flüssigkeit auf eine Zieltemperatur, die wiederum davon abhängig ist, wie mit der homogenisierten Flüssigkeit weiterverfahren wird, d.h. ob diese, wie später noch erläutert werden wird, fermentiert werden soll oder nicht. Fakultativ kann das erfindungsgemäße Verfahren, wie ebenfalls später noch im Detail erläutert werden wird, um einen Kalthochdruckhomogenisierschritt ergänzt werden, der vor dem Erhitzungsschritt und damit vor dem Heißhochdruckhomogenisierschritt zu implementieren ist.

Ganz wesentlich ist, dass es sich bei dem obligatorischen Hochdruckhomogenisierschritt um einen Heißhochdruckhomogenisierschritt handelt, der auf den Erhitzungsschritt auf eine Temperatur von mindestens 72°C folgt. Während des Erhitzungsschrittes kommt es zu einer Agglomeration der Mandelmehlpartikel, wobei die heiße Flüssigkeit mit den Agglomeraten dann erfindungsgemäß heißhochdruckhomogenisiert und gekühlt wird, um eine erneute Agglomeration zu verhindern. Daher ist es wesentlich, dass die obligatorische Hochdruckhomogenisierung auf den Erhitzungsschritt folgt und die erhitzte flüssige Mischung im erhitzten Zustand, d.h. heißhochdruckhomogenisiert wird.

Bei dem nach dem Abkühlen erhaltenen Lebensmittelpartikulat handelt es sich um eine Suspension von teilentölten Mandelpartikeln in Wasser, wobei die Mandelpartikel, verglichen mit aus dem Stand der Technik bekannten reinen Proteinpartikeln, in der Suspension deutlich größer und von vorneherein nicht löslich sind. Das Abkühlen der heißhochdruckhomogenisierten Flüssigkeit erfolgt vorzugsweise möglichst rasch, insbesondere unmittelbar nach der Hochdruckhomogenisierung, um Reagglomerationen der Mandelpartikel zu vermeiden. Insbesondere erfolgt die Abkühlung derart, bevorzugt so zügig, dass die heißhochdruckhomogenisierte Flüssigkeit nach Kühlung eine Partikelgrößenverteilung aufweist, die gekennzeichnet ist durch einen mittleren Partikeldurchmesser x_{50,3} < 36µm, vorzugsweise zwischen 5µm und 35µm, ganz besonders bevorzugt von 15µm. Ganz besonders bevorzugt zeichnet sich die Partikelgrößenverteilung durch einen Partikeldurchmesser x_{10,3} < 10µm, vorzugsweise zwischen 6µm und 9µm, weiter bevorzugt zwischen 7µm und 8µm und/oder vorzugsweise durch einen Partikeldurchmesser x_{90,3} < 100µm, insbesondere zwischen 1µm und 99µm, bevorzugt zwischen 10µm und 99µm, vorzugsweise zwischen 35µm und 99µm, weiter bevorzugt zwischen 36µm und 80µm, noch weiter bevorzugt zwischen 45µm und 75µm aus.

Der erfindungsgemäße Einsatz von teilentöltem Mandelmehl sowie dessen zuvor beschriebene Prozessierung führt zu einem völlig neuartigen, bevorzugten veganen, Lebensmittelpartikulat mit hervorragenden Eigenschaften, insbesondere als Rezepturbestandteil zur Herstellung von Lebensmittelendprodukten. Der erhöhte Protein- und reduzierte Fettgehalt des mit dem erfindungsgemässen Verfahren hergestellten Lebensmittelpartikulates (homogenisierte Suspension von teilentölten Mandelpartikeln in Wasser) ermöglicht einen bevorzugten Einsatz des Lebensmittelpartikulates als Rezepturbestandteil zur Herstellung von Lebensmittelendprodukten mit einem in einem weiten Bereich einstell- bzw. vorgebbaren Fettgehalt - insbesondere wird der Fettgehalt des Endproduktes nicht oder zumindest deutlich weniger begrenzt durch den Fettgehalt des Rezepturbestandteils (Lebensmittelpartikulat). Es handelt sich um ein proteinhaltiges Lebensmittelpartikulat, welches alternativ zu einem Einsatz als Rezepturbestandteil auch unmittelbar als Lebensmittelendprodukt konsumiert werden kann, insbesondere wenn bei dessen Herstellung vor und/oder während des Erhitzungsschrittes weitere Zutaten zugegeben werden.

Bei Bedarf, insbesondere für den Fall, jedoch nicht beschränkt hierauf, dass das Lebensmittelpartikulat unmittelbar, also ohne Weiterverarbeitung und/oder Beimischung zusätzlicher Komponenten, als Lebensmittelendprodukt eingesetzt werden soll, ist es, wie erwähnt, vor und/oder während des Erhitzungsschrittes möglich, zur Herstellung der flüssigen Mischung bzw. der erhitzten Flüssigkeit mindestens eine weitere Zutat, insbesondere aus der Gruppe von Zutaten: Salze, Hydrokolloide, Zucker, Zuckerersatzstoffe, Gewürze, beizumischen, wobei die Gesamtmenge sämtlicher weiterer Zutaten einen Gewichtsprozentanteil an der flüssigen Mischung von 10 Gew.-%, bevorzugt von 5 Gew.-%, weiter bevorzugt von 3 Gew.-%, noch weiter bevorzugt von 2 Gew.-%, noch weiter bevorzugt von 1 Gew.-% nicht überschreitet. Ganz besonders bevorzugt ist eine Ausführungsform des Verfahrens zur Herstellung eines Lebensmittelpartikulates als Rezepturkomponente in einem anderen Lebensmittelprodukt bzw. in einem Lebensmittelendprodukt, bei der auf die Beimischung jeglicher zusätzlicher Zutaten verzichtet wird. Unabhängig davon ist es bevorzugt, insbesondere im Hinblick auf die resultierenden ernährungsphysiologischen Defizite auf den Einsatz von Hydrokolloiden im Rahmen der Herstellung des Lebensmittelpartikulates bzw. im Lebensmittepartkulat zu verzichten.

Die vorteilhaften Ausgestaltungen der Erfindung sind in den Unteransprüchen angegeben.

Wie bereits erwähnt, kann zusätzlich zu der obligatorischen Heißhochdruckhomogenisierung vor dem Erhitzungsschritt ein Kalthochdruckhomogenisierschritt implementiert sein, bei dem, die vorzugsweise noch nicht erhitzte flüssige Mischung bei einer niedrigeren Temperatur hochdruckhomogenisiert wird, als bei der auf den Erhitzungsschritt folgenden Heißhochdruckhomogenisierung. Besonders bevorzugt ist die Partikelgrößenverteilung durch einen x_{50,3} Partikeldurchmesser von kleiner 36µm, vorzugsweise zwischen 5µm und 35µm, ganz besonders bevorzugt von, zumindest näherungsweise, 15µm gekennzeichnet. Ganz besonders bevorzugt ist es, wenn sich die Partikelgrößenverteilung weiterhin durch einen x_{10,3} Partikeldurchmesser von < 10µm, vorzugsweise zwischen 6 und 9µm, weiter bevorzugt zwischen 7 und 8µm auszeichnet. Zusätzlich oder alternativ ist es bevorzugt, wenn sich die Partikelgrößenverteilung durch einen x_{90,3} Partikeldurchmesser von < 100µm, insbesondere zwischen 1µm und 99µm, bevorzugt zwischen 10µm und 99µm, vorzugsweise zwischen 35 und 99µm, weiter bevorzugt zwischen 36 und 80µm, noch weiter bevorzugt zwischen 45 und 75µm auszeichnet. Der Partikeldurchmesser x_{10,3} bedeutet, dass 10% der Partikel in der Volumenverteilung kleiner sind als der angegebene Wert. Der x_{90,3} Partikeldurchmesser bedeutet, dass 90% der Partikel in der Volumenverteilung kleiner sind als der angegebene Wert.

Durch den fakultativen, jedoch bevorzugten Kalthochdruckhomogenisierschritt wird die Viskosität der flüssigen Mischung deutlich reduziert. Dies ist vorteilhaft, da die in der flüssigen Mischung enthaltenen Mandelmehlpartikel zum Quellen neigen. Durch die Kalthochdruckhomogenisierung und die damit verbundene Reduzierung der Viskosität wird es möglich, die flüssige Mischung auch mit einem noch weiter erhöhten Proteingewichtsanteil weiter zu verarbeiten bzw. durch die zum Einsatz kommenden Vorrichtungen zu fördern.

Zur Kalthochdruckhomogenisierung wird bevorzug auf jegliche aktive Erhitzung der zuvor produzierten flüssigen Mischung verzichtet - ganz wesentlich ist, dass die Kalthochdruckhomogenisierung bei einer Temperatur von, bevorzugt deutlich, unter 72°C, vorzugsweise zwischen 4°C und weniger als 60°C, ganz besonders bevorzugt zwischen 10°C und 40°C, noch weiter bevorzugt bei, zumindest näherungsweise, 22°C durchgeführt wird. Falls also eine aktive Erwärmung der flüssigen Mischung vorgesehen sein sollte, muss diese jedenfalls so ausgeführt werden, dass die Kalthochdruckhomogenisierung bei einer Temperatur aus einem vorgenannten Bereich durchgeführt wird. Aus der Kalthochdruckhomogenisierung resultiert dann eine kalthochdruckhomogenisierte flüssige Mischung, die dann erhitzt und, ggf. nach einer Heißhaltezeit, heißhochdruckhomogenisierend wird, um zu einem ersten oder zweiten Lebensmittelprodukt weiter verarbeitet zu werden.

Besonders bevorzugt ist es, wenn der fakultative Kalthochdruckhomogenisierschritt (erfindungsgemäß zumindest der später noch zu erläuternde, obligatorische Heißhochdruckhomogenisierschritt) derart durchgeführt wird, dass die flüssige Masse durch eine Düse, beispielsweise eine Spaltdüse bei hohen Drücken, erfindungsgemäß zwischen 20bar und 600bar, ganz besonders bevorzugt zwischen 100bar und 400bar gefördert wird, wobei der Druckstrahl bevorzugt auf eine Prallfläche, beispielsweise einen Prallring trifft. Eine solche Hochdruckhomogenisierung kann einstufig erfolgen, also derart, dass der gesamte Druckaufbau mittels einer Düse bzw. in einem Homogenisierschritt erfolgt oder alternativ mehrstufig, insbesondere derart, dass ein stufenweiser Abbau eines Anfangsdrucks schlussendlich dann bis insbesondere auf Atmosphärendruck erfolgt. Lediglich beispielhaft kann für die Hochdruckhomogenisierung eine zweistufige Hochdruckhomogenisiervorrichtung der Firma HST-Maschinenbau GmbH mit der Bezeichnung HL2.5-550K eingesetzt werden. Die später noch zu erläuternde Heißhochdruckhomogenisierung kann - bei entsprechender Temperaturwahl - ebenso ausgeführt werden, erfindungsgemäß in den vorgenannten Druckbereichen zwischen 20bar und 600bar, bevorzugt zwischen 100bar und 400bar.

Wesentlich ist, dass die fakultative Kalthochdruckhomogenisierung und vor allem die später noch zu erläuternde, obligatorische Heißhochdruckhomogenisierung so durchgeführt werden, dass das jeweilige Homogenisierungsergebnis eine wie mehrfach in vorliegender Offenbarung erläuterte Partikelgrößenverteilung aufweist. Der obligatorische Heißhochdruckhomogenisierschritt ist auf die zuvor beschriebene Vorrichtungsbauweise beschränkt, bei welcher ein Druckstrahl gegen eine Prallfläche, beispielsweise einen Prallring gefördert wird. Es können für den fakultativen Kalthochdruckhomogenisierschritt auch alternative Hochdruckhomogenisiervorrichtungen eingesetzt werden.

Ganz besonders bevorzugt ist es, wenn der fakultative, vorgelagerte Kalthochdruckhomogenisierschritt derart durchgeführt wird, insbesondere bei einem Druck von mindestens 20bar, bevorzugt zwischen 20bar und 600bar oder darüber, dass das erhaltene, erste Lebensmittelpartikulat eine Partikelgrößenverteilung aufweist, die gekennzeichnet ist, durch einen mittleren Partikeldurchmesser (Median der Volumenverteilung) x_{50,3} von kleiner als 36µm, vorzugsweise zwischen 5µm und 35µm, ganz besonders bevorzugt von, zumindest näherungsweise, 15µm. Ganz besonders bevorzugt ist es, wenn sich die Partikelgrößenverteilung weiterhin durch einen x_{10,3} Partikeldurchmesser von < 10µm, vorzugsweise zwischen 6 und 9µm, weiter bevorzugt zwischen 7 und 8 µm auszeichnet. Zusätzlich oder alternativ ist es bevorzugt, wenn sich die Partikelgrößeverteilung durch einen x_{90,3} Partikeldurchmesser von < 100µm, insbesondere zwischen 1µm und 99µm, bevorzugt zwischen 10µm und 99µm, vorzugsweise zwischen 35 und 99µm, weiter bevorzugt zwischen 36 und 80µm, noch weiter bevorzugt zwischen 45 und 75µm auszeichnet. Die kalthochdruckhomogenisierte flüssige Mischung zeichnet sich besonders bevorzugt durch einen Wassergehalt zwischen 75 und 99 Gew.-%, bevorzugt zwischen 80 und 85 Gew.-% aus. Bevorzugt beträgt der Fettgewichtanteil der kalthochdruckhomogenisierten flüssigen Mischung zwischen 0,1 und 6 Gew.-% und beträgt bevorzugt zumindest näherungsweise 2,5 Gew.-%. Der Proteingehalt beträgt bevorzugt zwischen 0,5 und 21 Gew.-%, ganz besonders bevorzugt, zumindest näherungsweise 6,5 Gew.-%. Bevorzugt beträgt der pH-Wert zwischen 6,2 und 6,8, ganz besonders bevorzugt beträgt der pH-Wert, zumindest näherungsweise 6,5.

Die flüssige Mischung kann, wie erwähnt, ohne einen vorherigen Kalthochdruckhomogenisierschritt oder nach einem solchen Kalthochdruckhomogenisierschritt erhitzt werden auf eine Temperatur zwischen 72°C und 138°C, bevorzugt zwischen 72°C und 99°C, noch weiter bevorzugt zwischen 72°C und 90°C, um somit eine erhitzte Flüssigkeit zu erhalten. Hierdurch denaturieren die in den Mandelmehlpartikeln neben weiteren Bestandteilen, wie Fasern, etc. enthaltenen Mandelproteine und es bilden sich große, raue Mandelproteinagglomerate aus. Dann erfolgt zum späteren Erhalten eines ersten oder zweiten Lebenmittelpartikulates ein Heißhochdruckhomogenisierschritt (ein- oder mehrstufig), wobei die Heißhochdruckhomogenisierung nach einer Heißhaltedauer erfolgt, wobei die Heißhaltedauer gewählt ist aus einem Wertebereich zwischen 30s und 25min, bevorzugt zwischen 30s und 5min. Eine Kombination aus Erhitzungstemperatur und Heißhaltezeit ist bevorzugt so gewählt, dass zum Zeitpunkt des Beginns der Heißhochdruckhomogenisierung eine Denaturierungsenthalpie < 3, vorzugsweise < 2, bevorzugt < 1 oder ganz besonders bevorzugt 0 Joule/g Protein beträgt. Eine unerhitzte bzw. noch nicht erhitzte flüssige Mischung, d.h. die noch unerhitzte Mandelpartikeldispersion hat üblicherweise eine Denaturierungsenthalpie zwischen 14 und 18 Joule/g Protein gemessen bei 91°C und einer Heizrate von 1°C/30s, wobei die Messung der Denaturierungsenthalpie grundsätzlich bevorzugt mittels dynamischer Differenzkalorimetrie erfolgt. Die Heißhochdruckhomogenisierung zeichnet sich dadurch aus, dass diese im (noch) erhitzten Zustand erfolgt, erfindungsgemäß bei einer Temperatur zwischen 50°C und 138°C, weiter bevorzugt zwischen 50°C und 120°C, noch weiter bevorzugt zwischen 60°C und 105°C, noch weiter bevorzugt zwischen 70°C und 95°C, ganz besonders bevorzugt zwischen 72°C und 90°C. Hieraus resultiert dann eine erhitzte, homogenisierte Flüssigkeit bzw. Suspension mit darin enthaltenen Mandelmehlpartikeln. Grundsätzlich kann die Heißhochdruckhomogenisierung bei der maximalen Erhitzungstemperatur des vorgelagerten Erhitzungsschrittes durchgeführt werden. Es ist jedoch möglich und bevorzugt, wenn diese maximale Erhitzungstemperatur der erhitzten Flüssigkeit während des Erhitzungsschrittes und die Temperatur der erhitzten Flüssigkeit zu Beginn und/oder während des Heißhochdruckhomogenisierungsschrittes auseinanderfallen, insbesondere derart, dass die erhitzte Flüssigkeit nach dem Erhitzungsschritt auf eine Heißhochdruckhomogenisierungstemperatur gekühlt wird, wobei die Heißhochdruckhomogenisierungstemperatur bevorzugt zwischen 72°C und 100°C beträgt, während die maximale Erhitzungstemperatur während des Erhitzungsschrittes bevorzugt über 100°C beträgt. Die Drücke und die Verfahrensweise der Heißhochdruckhomogenisierung sowie die eingesetzten Gerätschaften können analog zum zuvor im Detail erläuterten Kalthochdruckhomogenisierschritt gewählt werden. Erfindungsgemäß werden, Heißhochdruckhomogenisiervorrichtungen nach dem Prallflächenprinzip eingesetzt.

Unabhängig davon, ob vor der Heißhochdruckhomogenisierung eine Kalthochdruckhomogenisierung erfolgt oder bewusst auf diese verzichtet wird, ist erfindungsgemäß vorgesehen, dass der ein- oder mehrstufige Heißhochdruckhomogenisierschritt derart durchgeführt wird, bei einem Druck von mindestens 20bar, erfindungsgemäß bei einem Druck aus einem Wertebereich zwischen 20bar und 600bar, dass die erhitzte Flüssigkeit und damit die später gekühlte, zuvor erhitzte Flüssigkeit bzw. die daraus resultierenden ersten oder zweiten Lebensmittelpartikulate gemäß den Ansprüchen 9 und 11 eine Partikelgrößenverteilung aufweist, die gekennzeichnet ist, durch einen mittleren Partikeldurchmesser x_{50,3} von kleiner 36µm, vorzugsweise zwischen 5µm und 35µm, ganz besonders bevorzugt von, zumindest näherungsweise 15µm. Ganz besonders bevorzugt ist es, wenn sich die Partikelgrößenverteilung weiterhin auszeichnet durch einen x_{10,3} Partikeldurchmesser von < 10µm, vorzugsweise zwischen 6 und 9µm, weiter bevorzugt zwischen 7 und 8µm. Zusätzlich oder alternativ ist es bevorzugt, wenn sich die Partikelgrößenverteilung auszeichnet durch einen x_{90,3} Partikeldurchmesser von < 100µm, insbesondere zwischen 1µm und 99µm, bevorzugt zwischen 10µm und 99µm, vorzugsweise zwischen 35 und 99µm, noch weiter bevorzugt zwischen 36 und 80µm, ganz besonders bevorzugt zwischen 45 und 75µm.

Gemäß einer ersten Ausführungsform des erfindungsgemäßen Verfahrens zum Erhalten eines ersten Lebensmittelpartikulates wird die erhitzte, homogenisierte Flüssigkeit, insbesondere auf eine Temperatur zwischen 16°C und 46°C, bevorzugt zwischen 16°C und 44°C gekühlt und dann durch Zugabe von Milchsäurebakterien (Kultur, z.B. Joghurtkultur) fermentiert. Besonders bevorzugt ist es, wenn das fermentierte Produkt nach der Fermentation einem weiteren Kühlschritt unterzogen wird und dabei insbesondere auf eine Temperatur aus einem Wertebereich zwischen 0,1°C und 10°C gekühlt wird. Das fermentierte, erste Lebensmittelpartikulat kann entweder ausschließlich heißhochdruckhomogenisiert sein oder alternativ sowohl kalthochdruckhomogenisiert als auch heißhochdruckhomogenisiert, gemäß den zuvor beschriebenen möglichen Homogenisierschritten.

Das fermentierte, erste Lebensmittelpartikulat zeichnet sich unabhängig davon, ob es ausschließlich heiß- oder sowohl kalt- als auch heißhochdruckhomogenisiert wurde aus durch einen Wassergehalt zwischen 70 und 99 Gew.-%, vorzugsweise zwischen 80 und 85 Gew.-% und/oder einen Fettgehalt zwischen 0,1 und 4,5 Gew.-%, bevorzugt von zumindest näherungsweise 2,1 Gew.-% und/oder einen Proteingehalt zwischen 0,5 und 15,6 Gew.-%, bevorzugt von zumindest näherungsweise 6,5 Gew.-% und/oder einen pH-Wert zwischen 4,1 und 5,1, bevorzugt von näherungsweise 4,5.

Gemäß einer zweiten Ausführungsform des Verfahrens kann anstelle der Fermentation das Verfahren so ausgeführt werden, dass ein nicht-fermentiertes, zweites Lebensmittelpartikulat erhalten wird, indem nach dem Heißhochdruckhomogenisieren die erhitzte, hochdruckhomogenisierte Flüssigkeit, insbesondere auf eine Temperatur aus einem Wertebereich zwischen 0,1°C und 10°C, gekühlt und nicht fermentiert wird. Das nicht-fermentierte, zweite Lebensmittelpartikulat kann wiederum, analog zum ersten Lebensmittelpartikulat, ausschließlich heißhochdruckhomogenisiert oder alternativ sowohl heiß- als auch zuvor kalthochdruckhomogenisiert sein bzw. werden.

Bevorzugt zeichnet sich das nicht-fermentierte, zweite Lebensmittelpartikulat bei Kalt- und Heißhochdruckhomogenisierung durch einen Wassergehalt zwischen 70 und 99 Gew.-% bei Kalthochdruckhomogenisierung bzw. zwischen 75 und 99 Gew.-% ohne Kalthochdruckhomogenisierung, vorzugsweise zwischen 80 und 85 Gew.-% (mit oder ohne Kalthochdruckhomogenisierung) und/oder einen Fettgehalt zwischen 0,1 und 4,5 Gew.-%, ganz besonders bevorzugt von 2,1 Gew.-% und/oder durch einen Proteingehalt zwischen 0,5 und 15,6 Gew.-%, ganz besonders bevorzugt von 6,5 Gew.-% und/oder einen pH-Wert aus einem Wertebereich zwischen 6,2 und 6,8, vorzugsweise von zumindest näherungsweise, 6,5 aus. Das ausschließlich heißhochdruckhomogenisierte nicht-fermentierte zweite Lebensmittelpartikulat zeichnet sich bevorzugt durch einen Wassergehalt zwischen 75 und 99 Gew.-%, vorzugsweise zwischen 80 und 85 Gew.-% und/oder ein Fettgehalt zwischen 0,1 und 4,5 Gew.-%, vorzugsweise zumindest näherungsweise von 2,1 Gew.-% und/oder ein Proteingehalt zwischen 0,5 und 15,6 Gew.-%, bevorzugt von zumindest näherungsweise 6,5 Gew.-% und/oder ein pH-Wert zwischen 6,2 und 6,8, vorzugsweise von zumindest näherungsweise 6,5 aus.

Zusammenfassend können aus den erfindungsgemäßen Verfahren also ein fermentiertes erstes Lebensmittelpartikulat oder ein nicht-fermentiertes zweites Lebensmittelpartikulat, wobei das erste und das zweite Lebensmittelpartikulat jeweils entweder ausschließlich heißhochdruckhomogenisiert sein können, oder sowohl kalthochdruckhomogenisiert als auch heißhochdruckhomogenisiert. Das erste und/oder das zweite Lebensmittelpartikulat können/kann unmittelbar als Lebensmittelendprodukt konsumiert werden oder als Rezepturbestandteil im Rahmen vorteilhafter Weiterbildungen des Verfahrens weiterverarbeitet werden.

Zum Erhalten des ersten und/oder zweiten Lebensmittelpartikulates können der erhitzten, homogenisierten Flüssigkeit, insbesondere nach Kühlung mindestens eine weitere Zutat, insbesondere aus der Gruppe von Zutaten wie Kräuter, Früchte, Zubereitungen zugegeben werden. Im Falle des ersten Lebensmittelpartikulates erfolgt die Zugabe bevorzugt nach dem Fermentieren und ganz besonders bevorzugt nach dem fakultativen weiteren Kühlschritt auf eine Temperatur von weniger als 10°C. Im Falle des nicht-fermentierten zweiten Lebensmittelproduktes erfolgt die Zugabe bevorzugt auch nach einem Kühlen, bevorzugt auf eine Temperatur von maximal 44°C und oberhalb von 10°C oder nach dem Abkühlen auf eine Temperatur von unterhalb von 10°C.

Auf Basis eines Lebensmittelpartikulates ist es möglich und in Weiterbildung der Erfindung vorgesehen, ein, bevorzugt veganes, schnittfestes, bevorzugt bereits in Scheiben geschnittenes Lebensmittelendprodukt als Alternative zu einem Käse auf Milchbasis herzustellen. Zum Einsatz kommen kann hierbei das unfermentierte zweite Lebensmittelpartikulat sowohl in der Ausführungsform ausschließlich heißhochdruckhomogenisiert als auch in der Ausführungsform kalt- sowie heißhochdruckhomogenisiert. Auch ist es denkbar zur Herstellung des schnittfesten Lebensmittelendproduktes das fermentierte erste Lebensmittelpartikulat sowohl in der Ausführungsform ausschließlich heißhochdruckhomogenisiert als auch in der Ausführungsform kalt- sowie heißhochdruckhomogenisiert einzusetzen. Das erste oder zweite Lebensmittelpartikulat wird bevorzugt eingesetzt mit einem Gewichtsprozentanteilung zwischen 1 und 60 Gew.-%, vorzugsweise zwischen 30 und 50 Gew.-%, bevorzugt, zumindest näherungsweise, von 45 Gew.-%, wobei sich das erhaltene Lebensmittelendprodukt auszeichnet durch einen Gewichtsprozentanteil an Wasser zwischen 45 und 60 Gew.-%, vorzugsweise zwischen 52 und 56 Gew.-%, weiter bevorzugt von, zumindest näherungsweise 45 Gew.-% und/oder einem Gewichtsanteil an Fett zwischen 5 und 35 Gew.-%, bevorzugt zwischen 10 und 20 Gew.-% und/oder einem Gewichtsprozentanteil an Protein zwischen 1 und 10 Gew.-%, vorzugsweise zwischen 3 und 5 Gew.-% und/oder einem pH-Wert zwischen 4 und 7, vorzugsweise zwischen 4,8 und 5,0. Denkbar ist es ausschließlich das erste oder ausschließlich das zweite Lebensmittelpartikulat einzusetzen oder beliebige Mischungen. Im Fall des Einsatzes von Mischungen gelten die oben angegebenen, bevorzugten Gewichtsprozentanteile des Lebensmittelpartikulates für die Mischung, also die Gesamtmenge an erstem und zweitem Lebensmittelpartikulat.

Ebenfalls ist es möglich, auf Basis eines Lebensmittelpartikulates ein Lebensmittelendprodukt als Alternative zu einem Feta auf Milchbasis zu produzieren. Hierzu eignet sich das entweder kalt- sowie heißhochdruckhomogenisierte oder ausschließlich heißhochdruckhomogenisierte fermentierte, erste Lebensmittelpartikulat. Das erste Lebensmittelpartikulat kommt mit einem Gewichtsprozentanteil zwischen 1 und 60 Gew.-%, vorzugsweise zwischen 30 und 50 Gew.-%, bevorzugt von, zumindest näherungsweise, 45 Gew.-% zum Einsatz, wobei sich das Milchbasis-Feta-Alternative-Lebensmittelendprodukt auszeichnet durch einen Gewichtsprozentanteil an Wasser zwischen 40 und 60 Gew.-%, bevorzugt zwischen 52 und 57 Gew.-%, weiter bevorzugt von zumindest näherungsweise 55 Gew.-% und/oder einem Gewichtsprozentanteil an Fett zwischen 5 und 35 Gew.-%, bevorzugt zwischen 10 und 20 Gew.-% und/oder einem Gewichtsprozentanteil an Protein zwischen 1 und 10 Gew.-%, vorzugsweise zwischen 3 und 5 Gew.-% und/oder einem pH-Wert zwischen 3,5 und 6, vorzugsweise zwischen 4,4 und 4,7.

Auch ist es möglich, das erste, fermentierte Lebensmittelpartikulat (ausschließlich heiß- oder alternativ kalt- sowie heißhochdruckhomogenisiert) weiterzuverarbeiten zu einem, bevorzugt veganen, Lebensmittelendprodukt als Alternative zu einem gesäuerten Getränk auf Milchbasis. Dabei kommt das eingesetzte, erste Lebensmittelpartikulat mit einem Gewichtsprozentanteil zwischen 1 und 100 Gew.-%, vorzugsweise zwischen 1 und 99,9 Gew.-%, bevorzugt zwischen 15 und 25 Gew.-% zum Einsatz, wobei sich das Lebensmittelendprodukt dann auszeichnet durch einen Gewichtsprozentanteil an Wasser zwischen 70 und 95 Gew.-%, bevorzugt zwischen 80 und 90 Gew.-% und/oder ein Gewichtsprozentanteil an Fett zwischen 0,1 und 10 Gew.-%, bevorzugt zwischen 1 und 5 Gew.-% und/oder einen Gewichtsprozentanteil an Protein zwischen 0,1 und 10 Gew.-%, vorzugsweise zwischen 1 und 3 Gew.-% und/oder einen pH-Wert zwischen 3,5 und 6, vorzugsweise zwischen 4,1 und 4,7.

Als Alternative zu einem Quark oder Joghurt auf Milchbasis (mit vergleichbaren Textureigenschaften) kann das erste Lebensmittelpartikulat eingesetzt werden, insbesondere dann, wenn bereits während der Herstellung des fermentierten, ersten Lebensmittelpartikulates, bevorzugt vor und/oder während des obligatorischen Erhitzungsschrittes mindestens eine weitere Zutat, beispielsweise Pektin zugesetzt wird. Auch ist es denkbar, und im Rahmen der Erfindung vorgesehen, das fermentierte, erste Lebensmittelprodukt ohne weitere Zutaten als Lebensmittelendprodukt, insbesondere als Alternative zu einem Quark oder Joghurt auf Milchbasis anzubieten bzw. zu verzehren. In diesem Fall beträgt der Gewichtsprozentanteil des ersten, fermentierten Lebensmittelpartikulates am Endprodukt 100%. Unabhängig davon, ob mit oder ohne weitere Zutaten zeichnet sich die Alternative zu einem Quark oder Joghurt auf Milchbasis, d.h. das Lebensmittelendprodukt durch einen Gewichtsprozentanteil an Wasser zwischen 65 und 90 Gew.-%, vorzugsweise zwischen 70 und 85 Gew.-% und/oder einem Fettgehalt zwischen 0,2 und 25 Gew.-%, vorzugsweise zwischen 1,5 und 10 Gew.-% und/oder ein Proteingehalt zwischen 3 und 15 Gew.-%, vorzugsweise zwischen 6 und 10 Gew.-% und/oder einen pH-Wert zwischen 3,5 und 5,5, vorzugsweise zwischen 4,0 und 5,0 aus.

Das Lebensmittelpartikulat zeichnet sich aus durch einen, vorzugsweise ausschließlich aus dem Einsatz von teilentöltem Mandelmehl resultierenden, Mandelproteingewichtsprozentanteil zwischen 0,5 und 21 Gew.-%, vorzugsweise zwischen 4 und 10 Gew.-%, bevorzugt von, zumindest näherungsweise, 6,5 Gew.-% und einem, vorzugsweise ausschließlich aus dem Einsatz von teilentöltem Mandelmehl resultierenden, Gewichtsprozentanteil an Fett zwischen 0,1 und 5 Gew.-%, vorzugsweise zwischen 1 und 3 Gew.-%, bevorzugt zumindest näherungsweise von 2,1 Gew.-%, wobei das erfindungsgemäße Lebensmittelpartikulat eine Partikelgrößenverteilung aufweist, die gekennzeichnet ist, durch einen mittleren Partikeldurchmesser x_{50,3} von weniger als 36µm, vorzugsweise zwischen 5µm und 35µm, ganz besonders bevorzugt von 15µm.

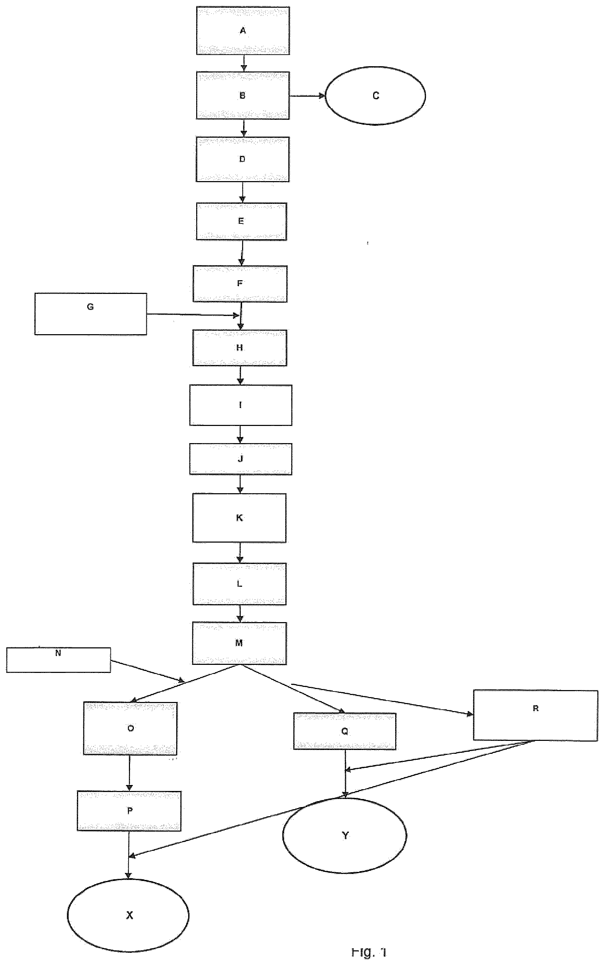

Weitere Vorteile, Merkmale und Einzelheiten der Erfindung ergeben sich aus der nachfolgenden Beschreibung eines bevorzugten Ausführungsbeispiels sowie anhand der einzigen Fig. 1.

Diese zeigt mögliche Ausgestaltungen des erfindungsgemäßen Verfahrens zur Herstellung entweder eines ersten, fermentierten Lebensmittelpartikulates, oder eines zweiten, unfermentierten Lebensmittelpartikulates, wobei das erste und das zweite Lebensmittelpartikulat jeweils entweder ausschließlich heißhochdruckhomogenisiert sein können oder sowohl kalt- als auch heißhochdruckhomogenisiert.

Bei A werden Mandeln blanchiert, wobei in B (Ölmühle) Mandelöl C entzogen wird. Es resultiert bei D ein Mandelpresskuchen der bei E gemahlen wird. Es resultiert daraus bei F Mandelmehl mit den im allgemeinen Beschreibungsteil beschriebenen Eigenschaften als Ausgangsbasis für die Herstellung von erfindungsgemäßem Lebensmittelpartikulat. Das erfindungsgemäße Verfahren kann um die zuvor erläuterten Vorstufen zur Herstellung des Mandelmehls erweitert werden.

Bei G werden Wasser und optional mindestens eine weitere Zutat, bevorzugt keine weitere Zutat zugegeben, und bei H mit dem Mandelmehl gemischt. Bei I handelt es sich um einen fakultativen Kalthochdruckhomogenisierschritt (> 20bar) zur Kalthomogenisierung der aus dem Mischen bei H erhaltenen flüssigen Mischung.

Bei J wird die flüssige Mischung, entweder nach erfolgter Kalthochdruckhomogenisierung oder unter Verzicht auf eine solche, erhitzt und zwar vorliegend auf eine Temperatur zwischen 72°C und 138°C - hierbei kommt es zu der Denaturierung der enthaltenen Proteine und Ausbildung von großen, rauen Mandelpartikelagglomeraten.

Der auf dem Erhitzungsschritt J folgende Schritt K ist wiederum fakultativ. Hierbei handelt es sich um einen Heißhalteschritt. Auf diesen, oder unmittelbar auf den Erhitzungsschritt J, folgt ein Heißhochdruckhomogenisierschritt bei L, auf welchen dann ein Kühlschritt bei M folgt. Im Rahmen dieses Kühlschrittes wird die zunächst noch heiße (> 60°C, bevorzugt ≥ 72°C), heißhochdruckhomogenisierte flüssige Mischung auf eine Temperatur aus einem Wertebereich zwischen 16°C und 44°C, bevorzugt auf 43°C gekühlt.

In dem in der Zeichnungsebene linken Strang wird bei N eine Milchsäurekultur, beispielsweise einer Joghurtkultur zugegeben und es erfolgt bei O eine Fermentation, insbesondere zwischen 2 und 16 Stunden, woraufhin bei P ein weiterer Kühlschritt auf eine Temperatur kleiner 10°C erfolgt, woraufhin fakultativ mindestens eine weitere Zutat R zugegeben werden kann. Es resultiert als mögliches Verfahrensergebnis ein fermentiertes, erstes Lebensmittelpartikulat, welches ausschließlich heißhochdruckhomogenisiert sein kann oder sowohl kalt- als auch heißhochdruckhomogenisiert.

Im rechten Strang wird die Kühlung bei Q fortgesetzt auf eine Temperatur kleiner 10°C, wobei selbstverständlich die Schritte M und Q im rechten Strang vereint sein können. An den angegebenen Stellen im rechten Strang kann die Zugabe mindestens einer weiteren Zutat bei R erfolgen. Es resultiert ein unfermentiertes, zweites Lebensmittelpartikulat als mögliches Verfahrensergebnis, das entweder ausschließlich heißhochdruckhomogenisiert oder kalt- und heißhochdruckhomogenisiert ist.

Die erhaltenen Lebensmittelpartikulate X, Y können, was bevorzugt und im Rahmen des allgemeinen Beschreibungsteils im Detail erläutert ist, als Rezepturbestandteil weiterverarbeitet werden zu, insbesondere veganen Lebensmittelendprodukten.

### Bezugszeichen

- X: erstes Lebensmittelpartikulat
- Y: zweites Lebensmittelpartikulat

## Patentansprüche

1. Verfahren zum Herstellen eines Lebensmittelpartikulates (X,Y) auf Mandelmehlbasis mit den Schritten:
a) Bereitstellen von teilentöltem Mandelmehl mit einem Fettgewichtsanteil zwischen 5 und 20 Gew.-% und einem Proteingewichtsanteil zwischen 43 und 57 Gew.- %
b) Bereitstellen von Wasser,
c) Herstellen einer flüssigen Mischung aus dem Mandelmehlpartikel enthaltenden, teilentölten Mandelmehl und dem Wasser, wobei der Gewichtsprozentanteil an dem Mandelmehl in der Mischung zwischen 1 und 40 Gew.-% und der Gewichtsprozentanteil an Wasser zwischen 60 und 99 Gew.-% gewählt wird,
d) Erhitzen der flüssigen Mischung auf eine Temperatur aus einem Wertebereich zwischen 72°C und 138°C und Erhalten einer erhitzten Flüssigkeit, wobei es während des Erhitzens zu einer Agglomeration der Mandelpartikel kommt,
**gekennzeichnet durch**
e) Hochdruckhomogenisieren der erhitzten Flüssigkeit nach einer Heisshaltedauer zwischen 30 s und 25 Min mit den Agglomeraten **durch** Fördern eines Druckstrahls gegen eine Prallfäche in einem, ein- oder mehrstufigen Heißhochdruckhomogenisierschritt bei einer Temperatur zwischen 50°C und 138°C und bei einem Druck aus einem Druckbereich zwischen 20bar und 600bar, wobei der Heißhochdruckhomogenisierschritt derart durchgeführt wird, dass die erhitzte heißhochdruckhomogenisierte Flüssigkeit eine Partikelgrößenverteilung aufweist, die **gekennzeichnet ist durch** einen mittleren Partikeldurchmesser x_{50,3} < 36 µm und Erhalten einer erhitzten, heißhochdruckhomogenisierten Flüssigkeit, wobei die Parameter zur Partikelgrößenverteilungen in wässriger Lösung mit einem partica laser scattering particle size distribution analyzer LA960 der Firma Horiba Scientific durchgeführt werden, mit einer Zirkulationsgeschwindigkeit 2 und einer Rührgeschwindigkeit 2, wobei jeweils eine Beschallung der Probe vor der Messung mit Ultraschall in Stärke 2 für 1 min erfolgt,
f) Kühlen der erhitzten, heißhochdruckhomogenisierten Flüssigkeit.

2. Verfahren nach Anspruch 1,
**dadurch gekennzeichnet,**
**dass** die flüssige Mischung, vorzugsweise ohne vorherigen Erhitzungsschritt, vor dem Erhitzungsschritt d) bei einer Temperatur unter 72°C, in einem ein- oder mehrstufigen Kalthochdruckhomogenisierschritt hochdruckhomogenisiert wird und eine kalthochdruckhomogenisierte flüssige Mischung erhalten wird.

3. Verfahren nach Anspruch 2,
**dadurch gekennzeichnet,**
**dass** der Kalthochdruckhomogenisierschritt derart durchgeführt wird, dass die kalthochdruckhomogenisierte flüssige Mischung eine Partikelgrößenverteilung aufweist, die **gekennzeichnet ist durch** einen mittleren Partikeldurchmesser x_{50,3} < 36µm, und vorzugsweise durch einen Partikeldurchmesser x_{90,3} < 100µm.

4. Verfahren nach einem der vorhergehenden Ansprüche,
**dadurch gekennzeichnet,**
**dass** eine Kombination aus Erhitzungstemperatur und einer Heißhaltezeit so gewählt wird, dass zum Zeitpunkt des Beginns der Heißhochdruckhomogenisierung eine Denaturierungsenthalpie der erhitzten Flüssigkeit (Mandelpartikeldispersion) < 3Joule/g Protein beträgt.

5. Verfahren nach einem der vorhergehenden Ansprüche,
**dadurch gekennzeichnet,**
**dass** der Heißhochdruckhomogenisierschritt derart durchgeführt wird, dass die erhitzte, heißhochdruckhomogenisierte Flüssigkeit eine Partikelgrößenverteilung aufweist, die **kennzeichnet ist durch** einen Partikeldurchmesser X_{90,3} < 100 µm, wobei die Parameter zur Partikelgrößenverteilungen in wässriger Lösung mit einem partica laser scattering particie size distribution analyzer LA960 der Firma Horiba Scientific durchgeführt werden, mit einer Zirkulationsgeschwindigkeit 2 und einer Rührgeschwindigkeit 2, wobei jeweils eine Beschallung der Probe vor der Messung mit Ultraschall in Stärke 2 für 1 min erfolgt.

6. Verfahren nach einem der vorhergehenden Ansprüche,
**dadurch gekennzeichnet,**
**dass** zum Erhalten des Lebensmittelpartikulates (X, Y) mindestens eine weitere Zutat aus der Gruppe von Zutaten: Kräuter, Früchte, Zubereitungen, vorzugsweise vor und/oder während des Erhitzungsschritts d) zugegeben wird.

7. Verfahren nach einem der vorhergehenden Ansprüche,
**dadurch gekennzeichnet,**
**dass** die erhitzte, heißhochdruckhomogenisierte Flüssigkeit auf eine Temperatur zwischen 16°C und 46°C gekühlt und dann mit Milchsäurebakterien fermentiert wird und ein fermentiertes, erstes Lebensmittelpartikulat (X) erhalten wird.

8. Verfahren nach Anspruch 5,
**dadurch gekennzeichnet,**
**dass** die erhitzte, heißhochdruckhomogenisierte Flüssigkeit gekühlt und nicht fermentiert wird und ein nicht-fermentiertes zweites Lebensmittelpartikulat (Y) erhalten wird.

9. Verfahren nach Anspruch 8,
**dadurch gekennzeichnet,**
**dass** das entweder kalt- und heißhochdruckhomogenisierte oder ausschließlich heißhochdruckhomogenisierte, zweite Lebensmittelpartikulat (Y) als Rezepturbestandteil mit einem Gewichtsprozentanteil zwischen 1 und 60 Gew.-% bei der Herstellung eines veganen, schnittfesten Milchbasis-Käse-Alternative-Lebensmittelendproduktes verwendet wird, welches sich durch einen Gewichtsprozentanteil an Wasser zwischen 45 und 60 Gew.-%-und/oder einen Gewichtsprozentanteil an Fett zwischen 5 und 35 Gew.-%, und/oder einen Gewichtsprozentanteil an Protein zwischen 1 und 10%und/oder einen pH-Wert zwischen 4 und 7 auszeichnet.

10. Verfahren nach Anspruch 7,
**dadurch gekennzeichnet,**
**dass** das entweder kalt- und heißhochdruckhomogenisierte oder ausschließlich heißhochdruckhomogenisierte, erste Lebensmittelpartikulat (X) als Rezepturbestandteil mit einem Gewichtsprozentanteil zwischen 1 und 60 Gew.-% bei der Herstellung eines veganen, schnittfesten Milchbasis-Käse-Alternative-Lebensmittelendproduktes verwendet wird, welches sich durch einen Gewichtsprozentanteil an Wasser zwischen 45 und 60 Gew.-%-und/oder einen Gewichtsprozentanteil an Fett zwischen 5 und 35 Gew.-%, und/oder einen Gewichtsprozentanteil an Protein zwischen 1 und 10%und/oder einen pH-Wert zwischen 4 und 7 auszeichnet.

11. Verfahren nach Anspruch 7,
**dadurch gekennzeichnet,**
**dass** das entweder kalt- und heißhochdruckhomogenisierte oder ausschließlich heißhochdruckhomogenisierte, fermentierte erste Lebensmittelpartikulat (X) als Rezepturbestandteil mit einem Gewichtsprozentanteil zwischen 1 und 60 Gew.-% bei der Herstellung eines veganen Milchbasis-Feta-Alternative-Lebensmittelendproduktes verwendet wird, welches sich durch einen Gewichtsprozentanteil an Wasser zwischen 40 und 60 Gew.-%, und/oder einen Gewichtsprozentanteil Fett zwischen 5 und 35 Gew.-%,-und/oder einen Gewichtsprozentanteil an Protein zwischen 1 und 10 Gew.-%-auszeichnet.

12. Verfahren nach Anspruch 7,
**dadurch gekennzeichnet,**
**dass** das entweder kalt- und heißhochdruckhomogenisierte oder ausschließlich heißhochdruckhomogenisierte, fermentierte erste Lebensmittelpartikulat (X) als Rezepturbestandteil mit einem Gewichtsprozentanteil zwischen 1 und 100 Gew.-% bei der Herstellung eines veganen, gesäuerten Milchbasis-Getränk-Alternative-Lebensmittelendproduktes verwendet wird, welches sich durch einen Gewichtsprozentanteil Wasser zwischen 70 und 95 Gew.-%, und/oder einen Gewichtsprozentanteil Fett zwischen 0,1 und 10 Gew.-%, und/oder einen Gewichtsprozentanteil an Protein zwischen 0,1 und 10 Gew.-%-und/oder einen pH-Wert zwischen 3,5 und 6,-auszeichnet.

13. Verfahren nach Anspruch 7,
**dadurch gekennzeichnet,**
**dass** das erste Lebensmittelpartikulat (X) auf Mandelbasis unmittelbar als Lebensmittelendprodukt verwendet wird, wobei das Lebensmittelpartikulat einen Mandelproteingewichtsprozentanteil zwischen 0,5 und 21 Gew.-% aufweist und einen Gewichtsprozentanteil an Fett zwischen 0,1 und 5 Gew.-%, wobei das Lebensmittelpartikulat eine Partikelgrößenverteilung aufweist, die **gekennzeichnet ist durch** einen mittleren Partikeldurchmesser X_{50,3} < 36 µm und vorzugsweise **durch** einen Partikeldurchmesser X_{90,3} < 100 µm, und dass das Lebensmittelprodukt als Alternative zu einem Quark oder Joghurt auf Milchbasis ausgebildet ist, in dem das Lebensmittelprodukt vollständig aus dem ersten Lebensmittelpartikulat (X) besteht, wobei die Parameter zur Partikelgrößenverteilungen in wässriger Lösung mit einem partica laser scattering particle size distribution analyzer LA960 der Firma Horiba Scientific durchgeführt werden, mit einer Zirkulationsgeschwindigkeit 2 und einer Rührgeschwindigkeit 2, wobei jeweils eine Beschallung der Probe vor der Messung mit Ultraschall in Stärke 2 für 2 min erfolgt.

14. Verfahren nach Anspruch 13,
**dadurch gekennzeichnet,**
**dass** zum Herstellen des Lebensmittelproduktes vor oder während des Erhitzungsschrittes mindestens eine weitere Zutat in Form von Pektin und/oder Hydrokolloid zugegeben wird.

## Claims

1. A method for producing a food product particulate (X, Y) based on almond flour, comprising the steps:
a) providing partially de-oiled almond flour having a proportion by weight of fat between 5 % by weight and 20 % by weight and a proportion by weight of protein between 43 % by weight and 57 % by weight,
b) providing water,
c) producing a liquid mixture of the partially de-oiled almond flour comprising almond flour particles and the water, the percentage by weight of the almond flour in the mixture being selected to be between 1 % by weight and 40 % by weight and the percentage by weight of water being selected to be between 60 % by weight and 99 % by weight,
d) heating the liquid mixture to a temperature from a temperature range between 72°C and 138°C and obtaining a heated liquid, an agglomeration of the almond particles taking place during the heating, **characterized by**
e) high-pressure homogenizing the heated liquid comprising the agglomerates after a heat-holding time between 30 s and 25 min by conveying a pressure jet against a baffle plate in a single-stage or multi-stage hot high-pressure homogenization step at a temperature between 50°C and 138°C and at a pressure from a pressure range between 20 bar and 600 bar, the hot high-pressure homogenization step being performed in such a manner that the heated high-pressure homogenized liquid has a particle size distribution which is **characterized by** a mean particle diameter x_{50,3} < 36 µm and obtaining a heated hot high-pressure homogenized liquid, the parameters with respect to particle size distributions being realized in an aqueous solution by means of a partica laser scattering particle size distribution analyzer LA960 of the company Horiba Scientific, at a circulation speed 2 and a stirring speed 2, each of the samples having been treated with ultrasound at strength 2 for 1 min prior to the measurement,
f) cooling the heated hot high-pressure homogenized liquid.

2. The method according to claim 1,
**characterized in that**
before the heating step d), the liquid mixture is high-pressure homogenized, preferably without a preceding heating step, at a temperature under 72 °C in a single-stage or multi-stage cold high-pressure homogenization step, and a cold high-pressure homogenized liquid mixture is obtained.

3. The method according to claim 2,
**characterized in that**
the cold high-pressure homogenization step is performed in such a manner that the cold high-pressure homogenized liquid mixture has a particle size distribution which is **characterized by** a mean particle diameter x_{50,3} < 36 and preferably by a particle diameter x_{90,3} < 100 µm.

4. The method according to any one of the preceding claims,
**characterized in that**
a combination of a heating temperature and a heat-holding time is selected in such a manner that, at the time of the beginning of the hot high-pressure homogenization, a denaturation enthalpy of the heated liquid (almond particle dispersion) is < 3 joule/g protein.

5. The method according to any one of the preceding claims,
**characterized in that**
the hot high-pressure homogenization step is performed in such a manner that the heated high-pressure homogenized liquid has a particle size distribution which is **characterized by** a particle diameter x_{90,3} < 100 µm, the parameters with respect to particle size distributions being realized in an aqueous solution by means of a partica laser scattering particle size distribution analyzer LA960 of the company Horiba Scientific, at a circulation speed 2 and a stirring speed 2, each of the samples having been treated with ultrasound at strength 2 for 1 min prior to the measurement.

6. The method according to any one of the preceding claims,
**characterized in that**
at least one additional ingredient from the group of ingredients: herbs, fruits, preparations, is added, preferably before and/or during the heating step d), in order to obtain the food product particulate (X, Y).

7. The method according to any one of the preceding claims,
**characterized in that**
the heated hot high-pressure homogenized liquid is cooled to a temperature between 16 °C and 46 °C and then fermented with lactic acid bacteria and a fermented first food product particulate (X) is obtained.

8. The method according to claim 5,
**characterized in that**
the heated hot high-pressure homogenized liquid is cooled and not fermented and a non-fermented second food product particulate (Y) is obtained.

9. The method according to claim 8,
**characterized in that**
the either cold and hot high-pressure homogenized or only hot high-pressure homogenized second food product particulate (Y) is used as a recipe component at a percentage by weight between 1 % by weight and 60 % by weight for the production of a vegan, firm final food product which is an alternative to milk-based cheese and which is **characterized by** a percentage by weight of water between 45 % by weight and 60 % by weight and/or a percentage by weight of fat between 5 % by weight and 35 % by weight and/or a percentage by weight of protein between 1 % by weight and 10 % by weight and/or a pH between 4 and 7.

10. The method according to claim 7,
**characterized in that**
the either cold and hot high-pressure homogenized or only hot high-pressure homogenized first food product particulate (X) is used as a recipe component at a percentage by weight between 1 % by weight and 60 % by weight for the production of a vegan, firm final food product which is an alternative to milk-based cheese and which is **characterized by** a percentage by weight of water between 45 % by weight and 60 % by weight and/or a percentage by weight of fat between 5 % by weight and 35 % by weight and/or a percentage by weight of protein between 1 % by weight and 10 % by weight and/or a pH between 4 and 7.

11. The method according to claim 7,
**characterized in that**
the either cold and hot high-pressure homogenized or only hot high-pressure homogenized, fermented first food product particulate (X) is used as a recipe component at a percentage by weight between 1 % by weight and 60 % by weight for the production of a vegan final food product which is an alternative to milk-based feta and which is **characterized by** a percentage by weight of water between 40 % by weight and 60 % by weight and/or a percentage by weight of fat between 5 % by weight and 35 % by weight and/or a percentage by weight of protein between 1 % by weight and 10 % by weight.

12. The method according to claim 7,
**characterized in that**
the either cold and hot high-pressure homogenized or only hot high-pressure homogenized, fermented first food product particulate (X) is used as a recipe component at a percentage by weight between 1 % by weight and 100 % by weight for the production of a vegan, acidified final food product which is an alternative to milk-based beverages and which is **characterized by** a percentage by weight of water between 70 % by weight and 95 % by weight and/or a percentage by weight of fat between 0.1 % by weight and 10 % by weight and/or a percentage by weight of protein between 0.1 % by weight and 10 % by weight and/or a pH between 3.5 and 6.

13. The method according to claim 7,
**characterized in that**
the first food product particulate (X) based on almonds is used directly as final food product, the food product particulate having a percentage by weight of almond protein between 0.5 % by weight and 21 % by weight and a percentage by weight of fat between 0.1 % by weight and 5 % by weight, the food product particulate having a particle size distribution which is **characterized by** a mean particle diameter x_{50,3} < 36 µm and preferably by a particle diameter x_{90,3} < 100 µm, and that the food product is an alternative to milk-based curd or yoghurt, in which the food product consists entirely of the first food product particulate (X), the parameters with respect to particle size distributions being realized in an aqueous solution by means of a partica laser scattering particle size distribution analyzer LA960 of the company Horiba Scientific, at a circulation speed 2 and a stirring speed 2, each of the samples having been treated with ultrasound at strength 2 for 2 min prior to the measurement.

14. The method according to claim 13,
**characterized in that**
at least one additional ingredient in the form of pectin and/or hydrocolloid is added before or during the heating step in order to obtain the food product.

## Revendications

1. Procédé de production d'une matière particulaire de produit alimentaire (X, Y) à base de farine d'amande, comprenant les étapes consistant à :
a) fournir de la farine d'amande partiellement déshuilée ayant une teneur en graisse entre 5 % en poids et 20 % en poids et une teneur en protéine entre 43 % en poids et 57 % en poids,
b) fournir de l'eau,
c) produire un mélange liquide de la farine d'amande partiellement déshuilée comprenant des particules de farine d'amande et de l'eau, la teneur en farine d'amande dans le mélange étant choisie entre 1 % en poids et 40 % en poids et la teneur en eau étant choisie entre 60 % en poids et 99 % en poids,
d) chauffer le mélange liquide à une température d'une plage entre 72 °C et 138°C et obtenir un liquide chauffé, une agglomération des particules d'amande étant réalisée pendant le chauffage,
**caractérisé par** les étapes consistant à
e) homogénéiser le liquide chauffé comprenant les agglomérats à haute pression après une durée de maintien de chaleur entre 30 s et 25 min par le transport d'un jet sous pression contre une surface de choc en une ou plusieurs étape(s) à une température entre 50 °C et 138°C et à une pression d'une plage de pression entre 20 bar et 600 bar, l'étape d'homogénéisation à haute pression chaude étant réalisée de telle manière que le liquide chauffé et homogénéisé à haute pression chaude a une distribution granulométrique des particules qui est **caractérisée par** un diamètre particulaire moyen de x_{50,3} < 36 µm et obtenir un liquide chauffé et homogénéisé à haute pression chaude, les paramètres de la distribution granulométrique des particules étant réalisés en solution aqueuse au moyen d'un partica laser scattering particle size distribution analyzer LA960 de l'entreprise Horiba Scientific à une vitesse de circulation de 2 et une vitesse d'agitation de 2, une application d'ultrason à chaque échantillon étant réalisée au niveau 2 pour 1 min avant la mesure,
f) refroidir le liquide chauffé et homogénéisé à haute pression chaude.

2. Procédé selon la revendication 1,
**caractérisé en ce que**
le mélange liquide est homogénéisé à haute pression à une température inférieure à 72 °C en une étape d'homogénéisation à haute pression froide en une ou plusieurs étape(s) avant l'étape de chauffage d), de préférence sans étape de chauffage précédente, et un mélange liquide homogénéisé à haute pression froide est obtenu.

3. Procédé selon la revendication 2,
**caractérisé en ce que**
l'étape d'homogénéisation à haute pression froide est réalisée de telle manière que le mélange liquide homogénéisé à haute pression froide a une distribution granulométrique des particules qui est **caractérisée par** un diamètre particulaire moyen de x_{50,3} < 36 µm et de préférence un diamètre particulaire de x_{90,3} < 100 µm.

4. Procédé selon l'une quelconque des revendications précédentes,
**caractérisé en ce**
**qu'**une combinaison d'une température de chauffage et d'une durée de maintien de chaleur est choisie de telle manière qu'une enthalpie de dénaturation du liquide chauffé (dispersion de particules d'amande) est < 3 joule/g de protéine au moment du début de l'homogénéisation à haute pression chaude.

5. Procédé selon l'une quelconque des revendications précédentes,
**caractérisé en ce que**
l'étape d'homogénéisation à haute pression chaude est réalisée de telle manière que le liquide chauffé et homogénéisé à haute pression chaude a une distribution granulométrique des particules qui est **caractérisée par** un diamètre particulaire moyen de x_{90,3} < 100 µm, les paramètres des distributions granulométriques des particules étant réalisés en solution aqueuse au moyen d'un partica laser scattering particle size distribution analyzer LA960 de l'entreprise Horiba Scientific à une vitesse de circulation de 2 et une vitesse d'agitation de 2, une application d'ultrason à chaque échantillon étant réalisée au niveau 2 pour 1 min avant la mesure.

6. Procédé selon l'une quelconque des revendications précédentes,
**caractérisé en ce**
**qu'**au moins un ingrédient additionnel du groupe d'ingrédients : herbes, fruits, préparations est ajouté, de préférence avant et/ou pendant l'étape de chauffage d), afin d'obtenir la matière particulaire de produit alimentaire (X, Y).

7. Procédé selon l'une quelconque des revendications précédentes,
**caractérisé en ce que**
le liquide chauffé et homogénéisé à haute pression chaude est refroidi à une température entre 16 °C et 46 °C et puis est fermenté avec des bactéries lactiques et une première matière particulaire de produit alimentaire (X) fermentée est obtenue.

8. Procédé selon la revendication 5,
**caractérisé en ce que**
le liquide chauffé et homogénéisé à haute pression chaude est refroidi et n'est pas fermenté et une deuxième matière particulaire de produit alimentaire (Y) non-fermentée est obtenue.

9. Procédé selon la revendication 8,
**caractérisé en ce que**
la deuxième matière particulaire de produit alimentaire (Y) homogénéisée à haute pression froide et chaude ou homogénéisée à haute pression exclusivement chaude est utilisée comme composant de recette avec une part entre 1 % en poids et 60 % en poids pour la production d'un produit alimentaire final végétalien et ferme qui est une alternative au fromage à base de lait et qui est **caractérisé par** une teneur en eau entre 45 % en poids et 60 % en poids et/ou une teneur en graisse entre 5 % en poids et 35 % en poids et/ou une teneur en protéine entre 1 % en poids et 10 % en poids et/ou un pH entre 4 et 7.

10. Procédé selon la revendication 7,
**caractérisé en ce que**
la première matière particulaire de produit alimentaire (X) homogénéisée à haute pression froide et chaude ou homogénéisée à haute pression exclusivement chaude est utilisée comme composant de recette avec une part entre 1 % en poids et 60 % en poids pour la production d'un produit alimentaire final végétalien et ferme qui est une alternative au fromage à base de lait et qui est **caractérisé par** une teneur en eau entre 45 % en poids et 60 % en poids et/ou une teneur en graisse entre 5 % en poids et 35 % en poids et/ou une teneur en protéine entre 1 % en poids et 10 % en poids et/ou un pH entre 4 et 7.

11. Procédé selon la revendication 7,
**caractérisé en ce que**
la première matière particulaire de produit alimentaire (X) fermentée et homogénéisée à haute pression froide et chaude ou homogénéisée à haute pression exclusivement chaude est utilisée comme composant de recette avec une part entre 1 % en poids et 60 % en poids pour la production d'un produit alimentaire final végétalien qui est une alternative à la feta à base de lait et qui est **caractérisé par** une teneur en eau entre 40 % en poids et 60 % en poids et/ou une teneur en graisse entre 5 % en poids et 35 % en poids et/ou une teneur en protéine entre 1 % en poids et 10 % en poids.

12. Procédé selon la revendication 7,
**caractérisé en ce que**
la première matière particulaire de produit alimentaire (X) fermentée et homogénéisée à haute pression froide et chaude ou homogénéisée à haute pression exclusivement chaude est utilisée comme composant de recette avec une part entre 1 % en poids et 100 % en poids pour la production d'un produit alimentaire final végétalien et acidifié qui est une alternative aux boissons à base de lait et qui est **caractérisé par** une teneur en eau entre 70 % en poids et 95 % en poids et/ou une teneur en graisse entre 0,1 % en poids et 10 % en poids et/ou une teneur en protéine entre 0,1 % en poids et 10 % en poids et/ou un pH entre 3,5 et 6.

13. Procédé selon la revendication 7,
**caractérisé en ce que**
la première matière particulaire de produit alimentaire (X) à base d'amande est utilisée %directement comme produit alimentaire final, la matière particulaire de produit alimentaire ayant une teneur en protéine d'amande entre 0,5 % en poids et 21 % en poids et une teneur en graisse entre 0,1 % en poids et 5 % en poids, la matière particulaire de produit alimentaire ayant une distribution granulométrique des particules **caractérisée par** un diamètre particulaire moyen de x_{50,3} < 36 µm et de préférence par un diamètre particulaire moyen de x_{90,3} < 100 µm, et que le produit alimentaire est réalisé comme alternative à un quark ou yaourt à base de lait dans laquelle la produit alimentaire consiste entièrement à la première matière particulaire de produit alimentaire (X), les paramètres des distributions granulométriques de particule étant réalisés en solution aqueuse au moyen d'un partica laser scattering particle size distribution analyzer LA960 de l'entreprise Horiba Scientific à une vitesse de circulation de 2 et une vitesse d'agitation de 2, une application d'ultrason à chaque échantillon étant réalisée au niveau 2 pour 2 min avant la mesure.

14. Procédé selon la revendication 13,
**caractérisé en ce**
**qu'**au moins un ingrédient additionnel en forme de pectine et/ou d'hydrocolloïde est ajouté avant ou pendant l'étape de chauffage afin d'obtenir le produit alimentaire.
